## Europäisches Patentamt
## European Patent Office
## Office européen des brevets

(19)

(11) Numéro de publication : **0 055 168**
**B1**

(12) **FASCICULE DE BREVET EUROPÉEN**

(45) Date de publication du fascicule du brevet :
02.03.88

(21) Numéro de dépôt : 81401986.5

(22) Date de dépôt : **11.12.81**

(51) Int. Cl.⁴ : **G 09 G   1/16, H 04 N   7/093**

(54) **Procédé et dispositif pour la visualisation de messages composés de pages sur un dispositif d'affichage à trame balayée tel qu'un écran d'un tube à rayons cathodiques.**

(30) Priorité : **12.12.80 FR 8026395**

(43) Date de publication de la demande :
**30.06.82 Bulletin 82/26**

(45) Mention de la délivrance du brevet :
**02.03.88 Bulletin 88/09**

(84) Etats contractants désignés :
**DE FR GB IT NL**

(56) Documents cités :
FR-A- 2 211 822
FR-A- 2 406 250
IBM TECHNICAL DISCLOSURE BULLETIN, volume 19, no. 3, août 1976 NEW YORK (US) D.J. CHESAREK "Formattable video band display", pages 1081-1084
VIDEOTEX, VIEWDATA & TELETEXT, a transcript of the online conference on videotex, viewdata and teletext, 1980, Online Publications NORTHWOOD HILLS, MIDDLESEX (GB) T. KUMAMOTO et al. "Captain system features : presentation capability and transmission method", pages 93-105
IEEE Transactions on Consumer Electronics, volume CE-25, no. 3, juillet 1979, pages 334-338, P. Prandon, G. Chauvel, "ANTIOPE LSI

(73) Titulaire : **TEXAS INSTRUMENTS FRANCE Société dite :**

**F-06270 Villeneuve Loubet (FR)**
**FR**
**TEXAS INSTRUMENTS INCORPORATED**
**13500 North Central Expressway**
**Dallas Texas 75265 (US)**
**DE GB IT NL**

(72) Inventeur : **Chauvel, Gérard**
**10, avenue des Chênes**
**F-06800 Cagnes Sur Mer (FR)**

(74) Mandataire : **Moncheny, Michel et al**
**c/o Cabinet Lavoix 2 Place d'Estienne d'Orves**
**F-75441 Paris Cedex 09 (FR)**

# 0 055 168

**Description**

La présente invention concerne, d'une façon générale l'affichage de messages sur un dispositif d'affichage à trame balayée utilisé notamment en tant que terminal de systèmes de traitement d'information.

Plus particulièrement, l'invention concerne l'édition, la transmission et la réception pour la visualisation de messages contenant des données de composition de pages destinées à être visualisées sur l'écran d'un tube à rayons cathodiques.

FR-A-2 211 822 concerne un procédé de transmission d'informations à travers un modulateur-démodulateur utilisant des signaux vidéo et des commandes entrelacées, adressées à un terminal particulier pouvant émettre un message en retour, les codes transmis au cours des périodes de retraçage de lignes étant destinés à identifier les signaux de commande. Il s'agit d'une méthode de transmission et non pas de visualisation comme c'est le cas dans la présente invention, les messages transmis correspondant à un terminal particulier et les signaux vidéo étant mélangés quant à leur nature graphique ou typographique. Ce procédé n'est donc pas approprié.

A l'heure actuelle, on divise les dispositifs de visualisation sur tube à rayons cathodiques en deux groupes quant à leur mode d'affichage, le premier d'entre ces modes étant de loin le plus utilisé. Il s'agit de la visualisation en mode dit typographique et en mode dit graphique.

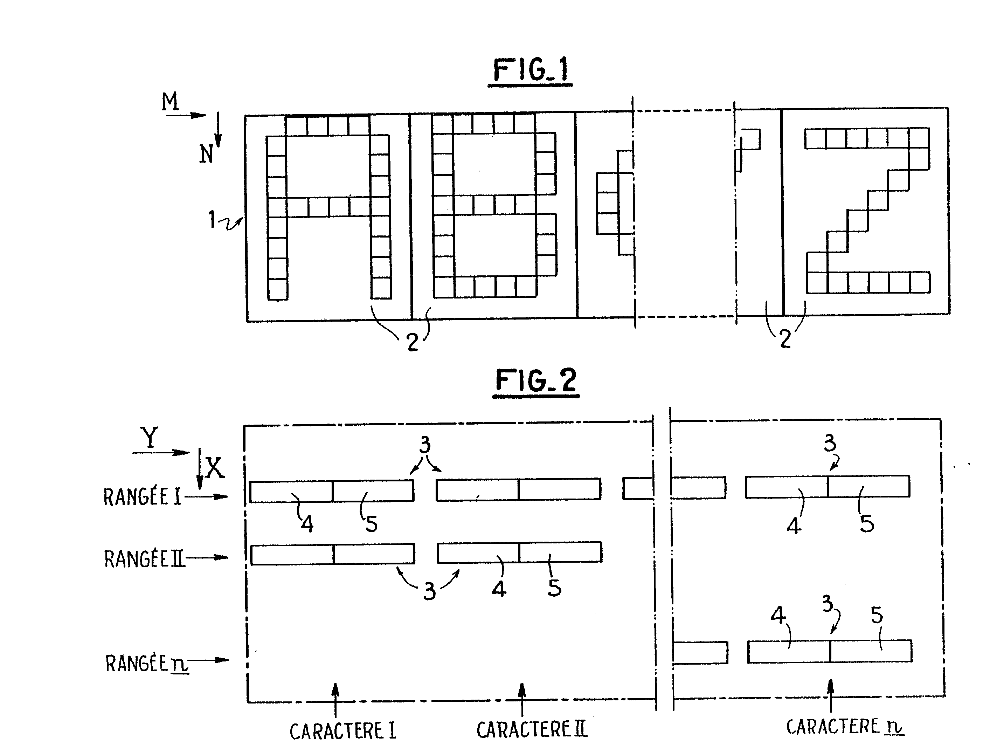

Pour mettre en œuvre la première de ces méthodes, il est connu d'utiliser des jeux de caractères dont la forme est définie par des matrices composées chacune de N lignes et de M points. La fig. 1 des dessins annexés représente schématiquement une rangée 1 de Y caractères composés à partir de telles matrices 2.

Les matrices sont mémorisées dans un ou plusieurs générateurs de caractères qui sont formés par des mémoires mortes ou par des zones correspondantes d'une mémoire composite associée au circuit commandant le tube à rayons cathodiques. Les générateurs de caractères comportent donc des positions adressables dans lesquelles sont stockées les informations nécessaires à l'affichage de chaque caractère alphanumérique que l'on se propose de visualiser sur l'écran.

Pour afficher une page de texte, l'appareil comporte également au moins une mémoire de page qui est une mémoire vive et dans laquelle sont stockées temporairement, c'est-à-dire avant la visualisation de la page, les codes des caractères alphanumériques à visualiser. Chaque caractère ainsi codé est formé de deux parties dont l'une est le code de caractère proprement dit (en code ASCII, par exemple) et dont l'autre est un code dit d'attributs relatifs à la couleur, au fond et à d'autres fonctions devant être réalisées au moment de la visualisation du caractère. La fig. 2 montre très schématiquement la configuration des caractères codés stockés dans une mémoire de page. On voit que chaque caractère 3 correspond à un caractère alphanumérique d'une rangée et qu'il est composé d'un code d'attributs 4 et d'un code de caractère 5. Les caractères codés sont rangés dans la mémoire à des positions qui correspondent à celles des caractères affichés sur l'écran.

Par conséquent, chaque fois qu'une page composée de X rangées de Y caractères doit être visualisée, la mémoire de page contient X × Y caractères codés. L'adressage successif de ces caractères codés permet d'accéder au générateur de caractères provoquant ainsi la visualisation. Cependant, pendant le déroulement de cette opération, il convient de tenir compte de la façon dont l'image est construite sur l'écran à savoir par balayage d'une trame composée de lignes entrelacées comme cela est bien connu dans la technique vidéo.

Les matrices étant composées de N lignes, chaque rangée de caractères est ainsi affichée par n adressages successifs de toutes les matrices de caractères d'une rangée, cet adressage étant réalisé au rythme du balayage ligne du tube à rayons cathodiques. Après affichage d'une rangée complète, la rangée suivante est visualisée ligne par ligne comme la précédente.

Le mode de visualisation typographique que l'on vient de décrire brièvement peut être complété pour permettre la visualisation d'informations de nature graphique, si on range dans un générateur de caractères des matrices représentant des signes autres que les caractères alphanumériques, ces matrices restant composées de M × N points. En dehors du fait que cette méthode de visualisation graphique est difficile à mettre en œuvre au niveau de la composition de l'image, il demande en outre une capacité de mémoire assez grande pour les générateurs de caractères qui sont en fait des mémoires mortes et en outre un répertoire approprié de signes graphiques nécessitant un grand nombre de matrices.

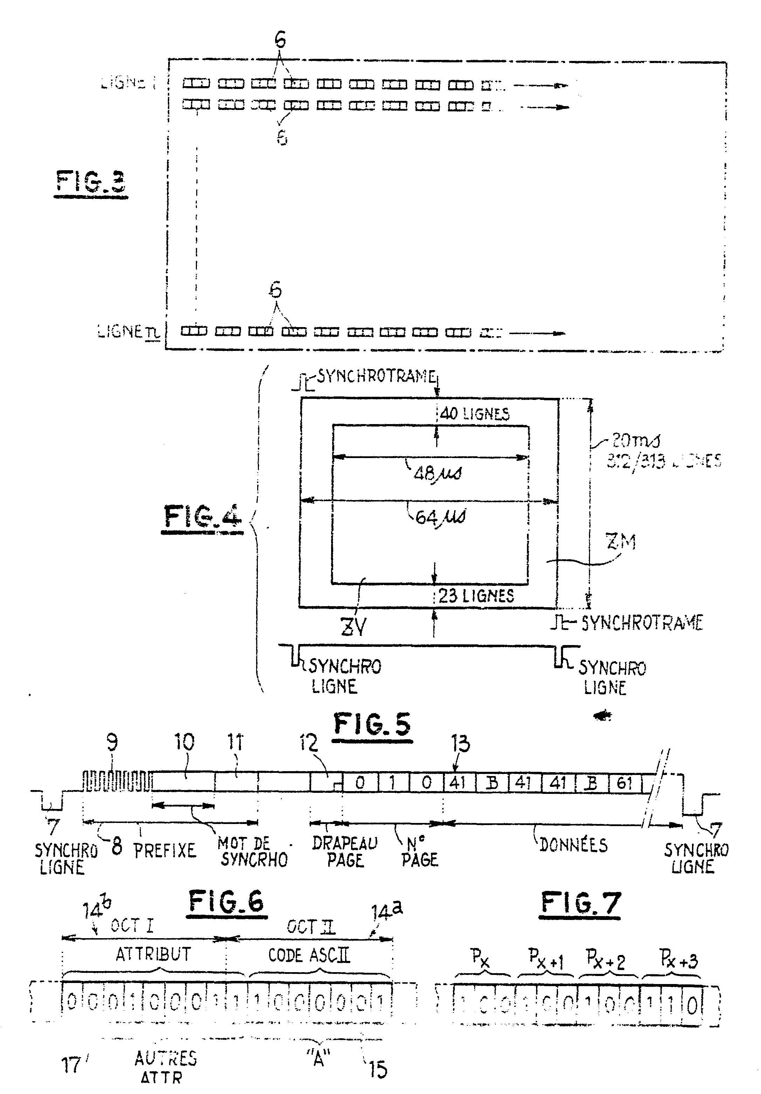

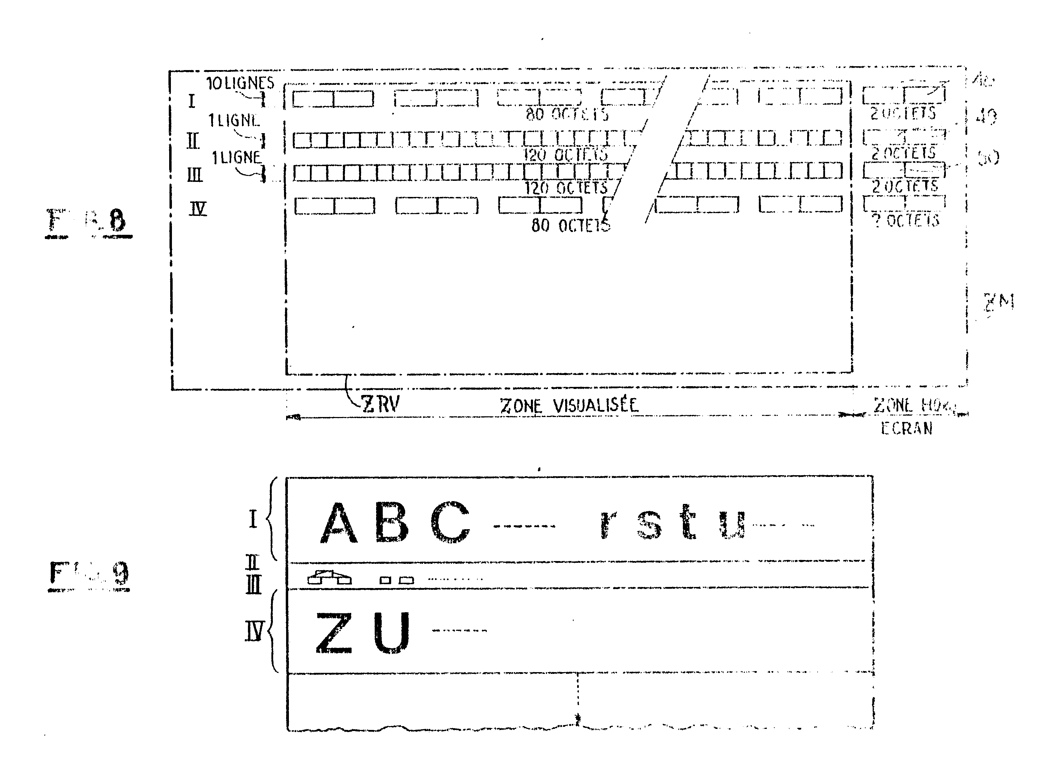

On a donc déjà mis au point un mode d'affichage graphique dans lequel on n'utilise pas de générateurs de caractères, mais au cours duquel, on emploie une mémoire de page contenant l'information de page sous forme de points distincts 6 (Fig. 3) codés de façon binaire. Ce code est en fait un code de fonction relatif à la couleur ou à la nuance de gris du point à afficher. Il est clair qu'une telle méthode permet de dessiner n'importe quelle forme sur l'écran dans la limite de la résolution imposée par la densité des points sur l'écran. Dans ce cas également, les points sont emmagasinés de préférence à des positions de mémoire correspondant à leur position dans l'image affichée et au cours de la visualisation. La mémoire de page est lue ligne par ligne au rythme du balayage ligne de l'écran.

Compte tenu de la différence dans la mise en œuvre de la visualisation en mode typographique et en mode graphique, il n'est pas possible de mélanger dans une même page de l'information alphanumérique et des dessins, graphiques ou autres formes composées de traits, car toute l'information relative à l'affichage d'une page donnée doit être stockée au préalable dans une mémoire de page, de sorte qu'il convient de déterminer à l'avance si la page est de nature typographique ou graphique.

Par conséquent, pour joindre à un message de texte des dessins graphiques, il faut nécessairement utiliser des pages distinctes pour la partie typographique et la partie graphique, ce qui revient en définitive à augmenter considérablement la capacité de la mémoire de page.

Cette augmentation peut être illustrée par l'exemple chiffré suivant.

On suppose que chaque matrice de caractères comporte 8 × 10 points d'images (M = 8, N = 10) et que chaque rangée comporte 40 caractères (Y = 40). Par ailleurs, chaque caractère nécessite deux octets (caractères et attributs) pour son identification dans la mémoire de page. Enfin, on suppose que chaque page comporte 25 rangées de caractères alphanumériques (X = 25). Dans ces conditions, en mode typographique, la mémoire de page doit avoir une capacité de 25 × 40 × 2 = 2 000 octets.

Si, par ailleurs, en mode graphique, on utilise un codage à trois bits pour chaque point (ce qui permet de lui affecter huit nuances de gris ou huit couleurs différentes), et si on suppose que l'image est composée d'un nombre de points égal à celui nécessaire pour écrire 40 matrices côte-à-côte, il faut donc par ligne disposer de 8 × 3 × 40 = 960 bits, ce qui revient à 120 octets par ligne. Pour un nombre égal de lignes d'image (25 × 10), la mémoire de page doit donc pouvoir stocker 250 × 120 = 30 000 octets.

On voit donc qu'en mode graphique, la capacité mémoire doit être au minimum 15 fois plus grande. A cela s'ajoute qu'il est souhaitable pour obtenir une visualisation appropriée de charger en alternance deux mémoires de page qui sont lues alternativement, ce qui nécessite donc une mémoire d'au minimum 60 K octets, si on veut pouvoir visualiser en mode graphique et en mode typographique sur le même écran.

Un autre inconvénient entraîné par la visualisation en mode graphique réside dans le temps relativement long qui est nécessaire pour que l'appareil récepteur puisse écrire les données dans sa mémoire de page (30 000 octets au lieu de 2 000 dans l'exemple décrit) et les en extraire au moment de la visualisation proprement dite.

Les inconvénients décrits ci-dessus sont relatifs à l'appareil de réception, mais il est évident que le mode graphique impose des contraintes également au niveau de l'émission, car pour une page en mode graphique, le temps d'occupation de l'appareil émetteur est naturellement très supérieur à celui nécessaire pour l'émission d'une page en mode typographique. En définitive, le mode graphique réduit donc considérablement la densité de l'information pouvant être transmise par unité de temps.

L'invention a pour but essentiel de fournir un procédé de visualisation de messages sur un dispositif d'affichage à trame balayée permettant tout en réduisant au minimum la capacité nécessaire de la mémoire de page, d'afficher des messages comportant des informations de natures typographiques et graphiques.

L'invention a donc pour objet un procédé pour la visualisation de messages composés de pages sur l'écran d'un dispositif d'affichage à trame balayée tel que d'un tube à rayons cathodiques, ou sur les écrans de plusieurs dispositifs d'affichage recevant les mêmes informations codées, les images des pages étant tracées sur chacun des écrans par un balayage ligne par ligne, ledit message comportant à la fois des éléments de nature typographique et des éléments de nature graphique, tandis que chaque page est mémorisée préalablement à son affichage dans une mémoire de page, à savoir, pour ce qui concerne les éléments typographiques sous la forme de groupes de code de caractères identifiant respectivement des matrices de caractères stockées dans au moins un générateur de caractères associé à la mémoire de page, chaque groupe de code de caractères correspondant au plus à une rangée ayant la largeur de la zone visible du dispositif d'affichage, et pour ce qui concerne les éléments graphiques sous forme de groupes de codes de points emmagasinés dans la mémoire de page, chaque groupe de code de points correspondant au plus à la largeur d'une ligne de l'image, ce procédé consistant lors de la visualisation, à tracer sur l'image successivement des lignes d'image au rythme du balayage ligne sous la commande soit des données extraites du générateur de caractères par adressages répétés des positions de celui-ci identifiés par les adresses contenues dans ladite mémoire pour former des rangées d'éléments typographiques, soit des données extraites directement de la mémoire de page pour former des lignes composées de points d'image individuels, ce procédé consistant à mélanger dans au moins une page du message des éléments typographiques et graphiques, et étant caractérisé en ce qu'il consiste en outre à mémoriser dans ladite mémoire de page entre le dernier octet d'un groupe d'adresses relatives à des éléments typographiques à visualiser et le premier octet d'un groupe d'adresses relatives à des éléments graphiques à visualiser, ou inversement, au moins un code binaire de mode de visualisation, lesdits dernier et premier octets correspondant respectivement à la fin et au début d'une période de balayage ligne de l'image, ledit code binaire ayant une durée inférieure au temps que met chaque balayage ligne pour traverser la marge latérale non visible de l'image vidéo, et à adresser ce code binaire au moment où doit se produire un changement de mode de visualisation pour provoquer sélectivement en vue de la visualisation de l'image, l'adressage des générateurs de caractères par l'intermédiaire de la mémoire de page ou l'adressage direct de celle-ci.

Ainsi, l'invention est basée sur la considération que statistiquement un message comporte en général plus d'éléments de nature typographique que d'éléments (Figures, dessins, etc..) de nature graphique, le mélange des deux modes conduisant donc en définitive à une réduction considérable de la taille mémoire, car en général la quantité de données relatives à une page sera très inférieure au nombre d'octets qui serait nécessaire pour la visualisation d'une page complète en mode graphique.

Suivant une autre caractéristique, ledit code binaire est formé par un groupe d'octets présenté après la dernière adresse d'un groupe de ligne ou d'une ligne du balayage ligne de l'image suivant que cette dernière adresse appartient respectivement au mode typographique ou graphique.

L'invention a également pour objet un dispositif pour la mise en œuvre du procédé tel que défini ci-dessus. Elle a encore pour objet, en tant qu'application de ce procédé, un procédé de transmission de messages destinés à être visualisés sur au moins un dispositif d'affichage, ainsi qu'un réseau de transmission pour la mise en œuvre de ce procédé.

D'autres caractéristiques et avantages de l'invention apparaîtront au cours de la description qui va suivre donnée uniquement à titre d'exemple et faite en référence aux dessins annexés sur lesquels :

— la Fig. 1 est une représentation schématique d'une rangée de caractères alphanumériques composés de matrices de visualisation stockées dans un générateur de caractères et destinées à la visualisation d'éléments typographiques ;

— la Fig. 2 est une représentation schématique de l'emmagasinage dans une mémoire de page des caractères codés relatifs au contenu du générateur de caractères de la Fig. 1 ;

— la Fig. 3 est une représentation schématique de l'emmagasinage dans une mémoire de page des données relatives à une visualisation en mode graphique ;

— la Fig. 4 est une représentation schématique d'un écran de télévision pour montrer comment est située dans une image vidéo transmise selon les standards classiques, la zone réellement visible par l'observateur ;

— la Fig. 5 représente un exemple d'un signal relatif aux données pouvant être utilisées pour la transmission d'une ligne vers un poste récepteur d'un système de télétexte connu sous la dénomination « Antiope », (mode typographique) ;

— la Fig. 6 montre schématiquement le contenu d'un caractère codé écrit dans une mémoire de page pour le mode typographique ;

— la Fig. 7 montre un schéma analogue pour l'écriture dans la mémoire de page des données de visualisation graphique ;

— la Fig. 8 est une représentation symbolique de l'écriture en mémoire d'une page des données relatives respectivement aux modes typographique et graphique, conforme aux caractéristiques du mode de mise en œuvre préféré de l'invention ;

— la Fig. 9 est un exemple d'une image réellement visible sur l'écran lorsque le procédé suivant l'invention est appliqué ;

— la Fig. 10 est un schéma général d'un poste récepteur destiné à la visualisation de pages de télétexte conformément au système de télétexte « Antiope » poste récepteur qui met en œuvre le procédé suivant l'invention ;

— la Fig. 11 montre un schéma de principe d'un circuit de ce poste récepteur mettant en œuvre le procédé de l'invention ;

— la Fig. 12 est un schéma symbolique d'un réseau de transmission mettant en œuvre une application du procédé suivant l'invention.

L'invention va être décrite en tant qu'application dans un système de télétexte appelé « Antiope » mais il est entendu qu'elle peut être appliquée dans tous les cas où il s'agit d'afficher sur un tube à rayons cathodiques ou autre, des messages composés de pages et contenant de l'information typographique et graphique.

Un exemple d'une telle application est un terminal d'un ordinateur ou autre système analogue de traitement de l'information.

Pour la clarté de l'exposé, il est utile de rappeler brièvement les caractéristiques essentielles du système de télétexte dénommé « Antiope ». Toutefois pour plus de détails, il y a lieu de se reporter aux ouvrages suivants :

1) un article de la revue de Radio Diffusion--Télévision n° 40-1975 par Bernard Marti et Michel Mauduit ;

2) un article « ANTIOPE LSI » de la revue IEEE Transactions on Consumer Electronics, volume CE-25, n° 3, Juillet 1979, pages 334-338, par P. Frandon et G. Chauvel. Cet article décrivant l'architecture générale du poste récepteur et le procédé correspondant au préambule de la revendication 1, et

3) un cahier de spécifications du système de télétexte « Antiope » édité par le Centre Commun d'Etudes de Télévision et de Communications (CCETT).

Le système de télétexte Antiope comporte un terminal de visualisation qui peut recevoir ses informations d'entrée d'une ligne téléphonique ou bien d'un signal de télévision diffusé par un émetteur et comportant en plus de l'information analogique relative aux images vidéo construites de façon classiques, de l'information sous forme binaire placée en multiplex sur le signal vidéo émis dans les intervalles laissés libres par les standards classiques de télévision tels que SECAM, PAL, NTSC, etc.

La fig. 4 des dessins annexés montre schématiquement la configuration d'une trame normalisée de télévision dans laquelle le rectangle intérieur ZV correspond à la zone réellement visible sur l'écran, l'espace marginal ZM correspondant notamment à 40 lignes en haut et 23 en bas de cette zone n'étant pas visible. Ainsi, dans un tel signal vidéo, chaque signal de trame situé entre deux impulsions de synchronisation de trame comporte une partie vidéo destinée à tracer une image vidéo par le signal vidéo analogique classique ainsi qu'une partie, d'une durée de vingt lignes, par exemple, destinée à la transmission du télétexte, par un signal se présentant sous forme binaire.

L'intervalle de temps nécessaire pour le balayage de ces lignes est donc rempli par un signal numérique dont la composition peut être celle de la Fig. 5 qui représente un exemple des données qui peuvent être transmises entre deux impulsions de synchronisation ligne.

L'originalité et les avantages considérables résultant du système Antiope par rapport aux autres systèmes de télétexte connus réside dans le fait que la transmission du message est totalement asynchrone et indépendante par rapport à la visualisation sur l'écran, le poste récepteur étant équipé de moyens lui permettant d'interpréter les données reçues, de les accumuler et de les visualiser sur l'écran d'une façon correcte, indépendamment du débit des données reçues.

Le signal ou paquet de données transmis entre deux impulsions de synchronisation ligne 7 comporte un préfixe 8 composé de huit octets décomposés en les éléments suivants :

— une salve de synchronisation 9 destinée à la synchronisation de la base de temps de l'appareil récepteur et à servir de référence à la reconstitution des octets suivants (3 octets) ;

— une identification de magazine 10 (3 octets) pour permettre la reconnaissance de l'appartenance du paquet de données à un magazine de page donné ;

— un groupe 11 de deux octets comportant un indice de nombre de paquets (1 octet) successifs émis pour le magazine concerné, ainsi qu'un indice de format qui contient le nombre total des octets dans le paquet considéré, ce nombre pouvant varier d'un signal à l'autre.

Le signal comporte également 32 octets de données dont des octets 12 de drapeau de page qui indiquent le numéro de la page de magazine dont font partie les données considérées. Ensuite, dans le cas de la Fig. 2, suit l'information 13 à visualiser réellement composée d'octets représentant dans le cas du mode typographique illustré et pour chaque caractère à afficher un code de caractère normalisé (le code ASCII par exemple), ainsi qu'un code dit d'attributs qui désigne certaines caractéristiques du caractère à afficher (couleur, par exemple).

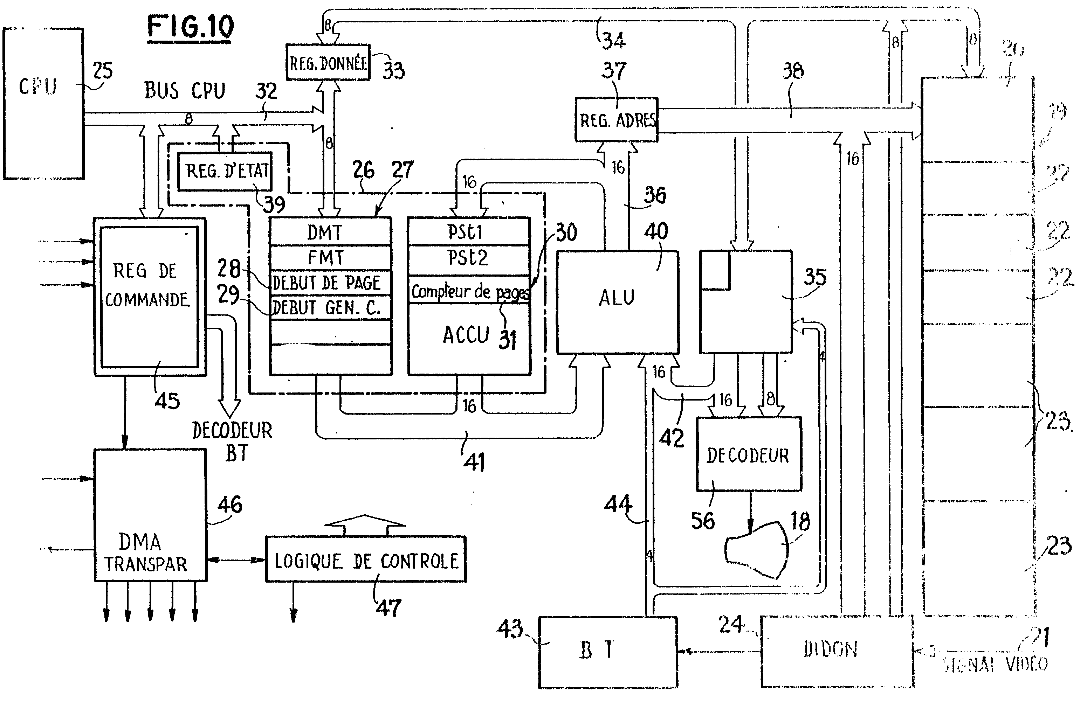

Ainsi, comme représenté sur la Fig. 6, on voit que le caractère « A » à afficher peut être transmis sous la forme de deux octets 14a et 14b comportant de droite à gauche le code ASCII 15 (100-0001 en l'occurrence) sur sept bits, ainsi qu'un code d'attributs 17 qui peut être la couleur du caractère ou sa taille par exemple. Les données de caractères peuvent alterner avec des données relatives au fond de l'image ou à d'autres éléments du message, tels que le code espace, un code de ligne dans le cas ou des lignes de l'image doivent être sautées, etc.

Bien entendu, les codes ainsi contenus dans chaque intervalle entre deux impulsions de synchronisation sont, dans le cas du mode typographique, des caractères codés devant être écrits dans une mémoire de page qui coopère avec un ou plusieurs générateurs de caractères utilisés pour la visualisation sur l'écran.

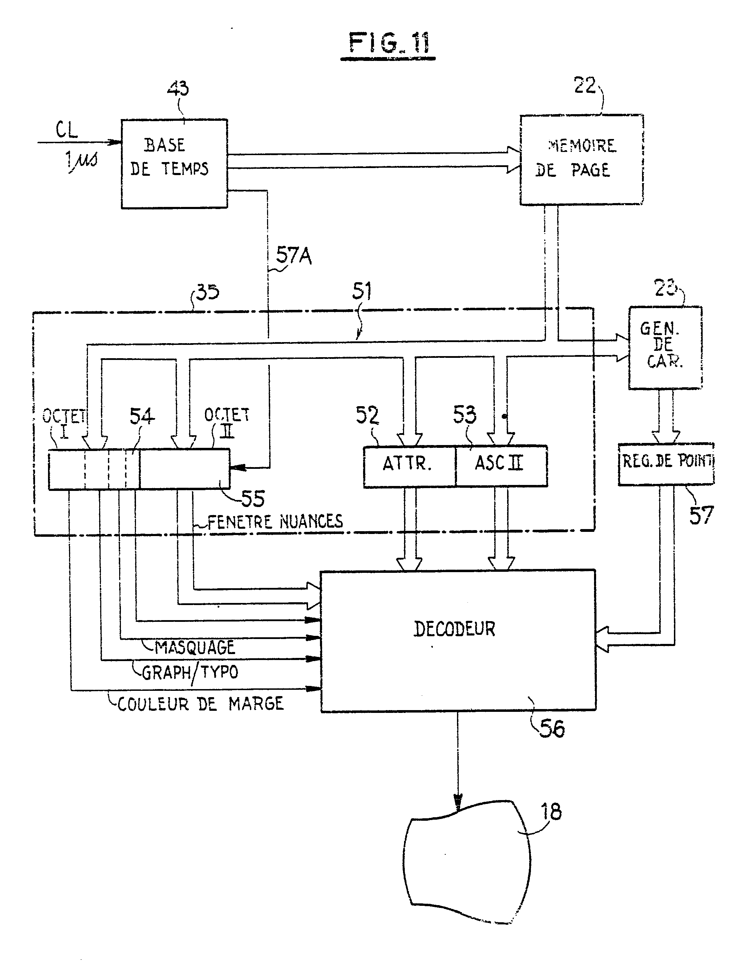

Il en va différemment dans le cas où le message contient des données relatives au mode graphique. La Fig. 7 représente une partie des données pouvant être transmises et interprétées par le poste récepteur. Chaque point d'image Px, Px + 1, Px + 2, Px + 3... est tranmis sous la forme d'un code à 3 bits désignant en fait la valeur d'une échelle des couleurs primaires ou de nuances de gris et à la réception ces données sont stockées dans la mémoire de page pour être visualisées sans l'aide des générateurs de caractères.

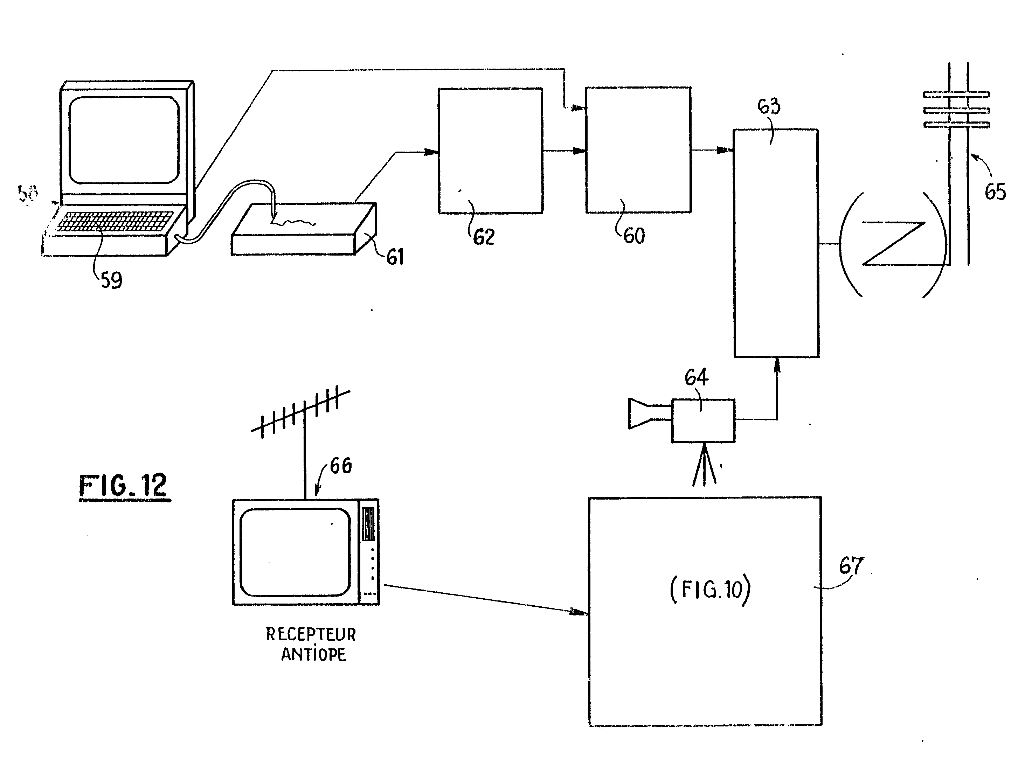

Le schéma de principe représenté sur la Fig. 10 concerne la partie du poste récepteur du système Antiope capable de séparer l'information binaire relative au télétexte du signal vidéo émis et de transformer cette information en des images affichées sur un écran d'un tube cathodique, ici schématisé en 18.

Le poste ou terminal comporte une mémoire composite 19 dont les sections sont affectées au stockage de données de natures diverses. Tout d'abord, cette mémoire composite comporte une zone qui constitue une mémoire tampon 20 capable de stocker provisoirement des données d'entrée séparées du signal vidéo appliqué au terminal (flèche 21).

En outre, la mémoire 19 comporte plusieurs zones 22 affectées à l'emmagasinage de pages d'information devant être affichées, ces zones étant appelées mémoires de page et d'autres zones 23 affectées au stockage de l'information de caractères appelées générateurs de caractères. Ces dernières zones peuvent être du type mémoire morte tandis que les zones 22 sont des mémoires vives comme l'est naturellement la mémoire tampon 20.

Le signal vidéo multiplexé 21 est appliqué à un circuit séparateur 24 appelé « Didon » pour séparer l'information du télétexte, du signal vidéo destiné à la diffusion d'images vidéo classiques.

Dans le dispositif de la Fig. 10, la gestion de l'ensemble des données provenant de la mémoire tampon 20 est assurée par une unité de traitement central 25 (CPU) et par ses organes périphérique associés. Cette unité 25 est chargée notamment de traiter la partie des paquets de données contenant les informations d'affichage proprement dites telles que les informations de mode typographique ou graphique.

Le circuit de commande de la mémoire tampon 20 est représenté essentiellement dans le cadre en pointillés 26 de la Fig. 10 et il assure la gestion du contenu de la mémoire tampon 20. Des registres DMT (début de Mémoire Tampon) et FMT (Fin de Mémoire Tampon) font partie d'une pile de registres 27 contenant également d'autres registres pour stocker des adresses relatives à d'autres zones de la mémoire composite 19. Par exemple, il est prévu un registre 28 d'adresse de début de page et un ou plusieurs registres 29 d'adresse de début de générateur de caractères. Par ailleurs, il est prévu un accumulateur 30 qui comporte notamment des compteurs ou pointeurs $PST_1$ et $PST_2$ de la mémoire tampon 20 ainsi que d'autres compteurs tel qu'un compteur 31 des pages du magazine transmis.

La pile de registres 27 est reliée au réseau de bus de données 32 connecté à un registre de données 33 lui-même relié par le bus 34 à la mémoire 19, au séparateur Didon 24 et à un dispositif 35 de traitement des données typographiques et graphiques devant être affichées sur l'écran du tube 18. Le dispositif de traitement 35 sera décrit en détail ci-après.

L'accumulateur 30 est relié à un bus d'adresses 36 communiquant avec un registre d'adresses 37 qui est connecté à son tour à l'entrée d'adresses de la mémoire 19 par un bus 38.

Un registre d'état 39 est relié au bus 32 communiquant avec l'unité de traitement central 25.

Le dispositif d'affichage de télétexte comporte également une unité arithmétique et logique 40 chargée d'élaborer les adresses devant être envoyées à la mémoire 19 d'une part à partir de la pile de registres 27 et de l'accumulateur 30 par un bus 41 et d'autre part à partir du dispositif 35 de traitement de données typographiques et graphiques par un bus 42 sur lequel circulent les adresses en code ASCII des caractères stockées dans les générateurs de caractères 23 de la mémoire composite 19.

Un circuit de base de temps 43 relié au dispositif séparateur Didon 24 et aux divers autres organes du dispositif d'affichage par des bus 44 assure la synchronisation de toutes les opérations.

Un registre de commande 45 assure la gestion des données circulant sur les bus pour les introduire dans les registres appropriés, tandis qu'un dispositif 46 d'accès direct à la mémoire de type transparent assure la gestion de l'accès à la mémoire 19 par les divers organes du dispositif d'affichage sans qu'il y ait interaction possible entre ces organes. On trouve une description détaillée d'un tel dispositif d'accès direct à la mémoire dans la demande de brevet FR-A-2 406 250 ayant pour titre « Dispositif d'accès direct à une mémoire associée à un microprocesseur ».

Le dispositif 46 d'accès direct à la mémoire est associé à une logique de contrôle 47.

Après avoir examiné l'architecture générale du poste récepteur ou terminal, on va maintenant décrire plus en détail le procédé suivant l'invention et sa mise en œuvre dans ce poste récepteur en examinant le dispositif de traitement 35 mentionné ci-dessus qui est conçu spécialement à cet effet.

Toutefois, il y a lieu de se reporter d'abord aux Fig. 8 et 9 qui illustrent le concept de base du procédé suivant l'invention.

La Fig. 8 montre schématiquement le contenu d'une mémoire de page recevant les données d'une page par transfert de ces données à partir de la mémoire tampon 20 sous la commande du circuit de commande 26.

Dans l'exemple représenté, on suppose que la page à afficher comporte une partie typographique ainsi qu'une partie graphique réparties chacune sur un certain nombre de lignes de l'image. Ainsi, la mémoire de page comporte une première rangée I d'adresses typographiques constituées chacune par un octet d'attributs et un octet de code ASCII, relatifs à un caractère à afficher. Dans l'exemple décrit, cette rangée d'adresses comporte donc 80 octets et sur l'écran, la rangée de caractères affichés occupe dix lignes d'image. Les octets ainsi stockés dans la mémoire sont utilisés pour la visualisation et commandent un générateur de caractères de la façon déjà décrite, et ils concernent donc uniquement la zone réellement visible sur l'écran indiquée en ZRV. Toutefois, on sait que l'image visible est bordée de zones marginales ZM si bien que chaque rangée d'adresses dans la mémoire de page peut comporter une partie comportant, par exemple en fin de rangée, une zone de mémoire dans laquelle on peut ranger des octets. Ce concept est mis à profit dans l'invention pour identifier la nature d'une rangée suivante d'adresses contenues dans la mémoire de page. Ces octets se trouvent naturellement contenus dans le signal que l'on a décrit ci-dessus à propos de la Fig. 5 et ils sont interprétés par les circuits du poste récepteur pour commander la mise en état d'affichage typographique ou graphique suivant le cas.

Sur la Fig. 8, les octets 48 sont donc destinés à identifier la nature de la rangée suivante des adresses de la mémoire de page, cette rangée étant dans cet exemple une rangée graphique.

Cette rangée II est composée, pour ce qui concerne la zone ZRV, de 120 octets contenant 3 bits d'information pour 320 points d'image à visualiser et elle se termine par deux octets d'identification 49 relatifs à l'affichage de la rangée III suivante qui est ici encore de nature graphique, dont le contenu est également de 120 octets et qui se termine par deux octets d'identification 50. Ceux-ci, dans l'exemple, déterminent la rangée IV suivante de nature typographique.

Ainsi, on peut stocker une page de télétexte dans une mémoire de page en mélangeant des éléments typographiques et graphiques jusqu'à concurrence de la capacité totale de la mémoire de page.

Le procédé suivant l'invention consiste donc à mélanger dans une même page de message, des éléments typographiques et graphiques (rangées I, IV et II, III, par exemple) tout en insérant entre chaque groupe de données relatives à des éléments typographiques et chaque groupe de données relatives à des éléments graphiques, un code binaire (octets 48 à 50, par exemple).

Bien entendu, il est possible compte tenu de l'intervalle de temps disponible lors du balayage ligne de part et d'autre de la zone visualisée ZRV, d'insérer un nombre d'octets supérieur à deux. Cet intervalle de temps étant au total de 24 µsec, on pourrait utiliser au besoin 48 octets. Dans ces conditions, ces octets supplémentaires peuvent être utilisés pour contenir informations ou instructions autres que celles relatives aux modes de visualisation. Ainsi, on peut prévoir de transmettre :

— un code de couleur de la prochaine rangée à visualiser ;

— un mode d'affichage en superposition sur une image vidéo transmise par le canal de télévision sous forme analogique (cas du sous-titrage de films, par exemple) ;

— un facteur de répétition d'une rangée devant ainsi occuper une partie plus grande de l'écran ;

— un code permettant de changer les caractéristiques de l'image (changement total du fond, par exemple).

Il est clair que selon le rapport des surfaces utilisées pour les visualisations typographiques et graphiques, il convient de disposer d'une mémoire de page de taille plus ou moins grande. Cependant, on conçoit qu'une même page n'a pas besoin de contenir que des éléments graphiques et qu'à l'émission, on peut faire en sorte que la part réservée aux éléments graphiques ne dépasse pas une certaine limite compatible avec la taille des mémoires de page prévues dans les équipements de réception installés chez les utilisateurs du système de télétexte.

Il en résulte en définitive que l'on peut économiser de la capacité mémoire dans les postes récepteurs. Par ailleurs, on obtient une souplesse de composition appréciable du fait que les deux modes de visualisation peuvent être mélangées en fonction des besoins.

Les octets d'identification peuvent se trouver en début de rangée ou en fin de rangée, mais ils sont toujours insérés avant la rangée dont ils déterminent les caractéristiques.

Un exemple peut illustrer la réduction de la taille de la mémoire que l'on peut obtenir grâce à l'invention.

On suppose que l'écran présente 250 lignes à l'aide desquelles on peut afficher 25 rangées de 40 caractères typographiques ou 250 lignes de points graphiques. Une matrice comporte $10 \times 8$ points image.

Si un cinquième de l'écran est en mode graphique (c'est-à-dire 50 lignes), le nombre d'octets à transmettre sera le suivant :

— 200 lignes en mode typographique représentant 20 rangées de 40 caractères, chaque caractère nécessitant deux octets, et deux octets d'identification :

$$20 \,(40 \times 2 + 2) = \qquad\qquad\qquad\qquad\qquad\qquad 1\,640 \text{ octets}$$

— 50 lignes en mode graphique suivies chacune de deux octets d'identification :

$$50 \,[(320 \times 3/8) + 2] = \qquad\qquad\qquad\qquad \underline{6\,100 \text{ octets}}$$
$$\text{TOTAL} = \overline{7\,740 \text{ octets}}$$

On constate donc que le mélange des deux types d'éléments de message permet d'utiliser des mémoires de page d'une capacité raisonnable, tandis que selon la technique antérieure, il aurait fallu procéder pour la même information à la visualisation de deux pages distinctes nécessitant pour la page graphique une capacité de mémoire de page de $120 \times 250 = 30.000$ octets.

Dans la description qui précède, on suppose que les octets d'identification sont stockés dans la mémoire de page en étant mélangés à l'information concernant les données à afficher. Il rentre dans le cadre de l'invention de prévoir une mémoire spéciale pour le stockage de ces octets et adressée aux instants appropriés par l'unité de traitement central du système, par exemple.

La Fig. 9 représente l'aspect de la zone visualisée de l'écran pour une configuration des éléments du message correspondant à un contenu de la mémoire de page selon la Fig. 8 avec une rangée de caractères, deux rangées d'éléments graphiques et ensuite de nouveau une rangée de caractères, etc.

La Fig. 11 est un schéma simplifié de la partie du dispositif de traitement 35 représenté sur la Fig. 10 pour prendre en compte les octets d'identification 48 à 50 (Fig. 8).

La mémoire de page 22 communique avec le circuit à base de temps 43 et l'unité arithmétique et logique 40 par l'intermédiaire du registre d'adresse 37 (Fig. 10). Les données extraites de la mémoire de page sont introduites dans un groupe 51 de registres comportant respectivement un registre 52 auquel sont appliquées les données d'attributs, un registre 53 qui reçoit les données du code ASCII appliquées également au générateur de caractères 23 et deux registres 54 et 55 d'identification de mode de visualisation. Les sorties de ces registres sont reliées à un décodeur 56 transformant les données reçues en signaux appropriés pour être affichés sur le tube cathodique 18. Le générateur de caractères est relié à ce décodeur 56 par l'intermédiaire d'un registre de points 57 en vue de l'affichage des lignes de matrices de caractères comme décrit ci-dessus à propos des Fig. 1 et 2.

Le circuit à base de temps 43 est relié aux registres 54 et 55 par un conducteur 57A qui leur envoie un signal de validation de marge au moment où la zone non visible de l'écran est atteinte lors du balayage de l'écran. En d'autres termes, ce signal de validation de marge est fourni à la fin de l'affichage de la dizième ligne d'une rangée de caractères typographiques ou à la fin de l'affichage d'une ligne de points graphiques.

Les octets rangés dans les registres 54 et 55 peuvent comprendre, outre l'information de mode de visualisation, des données concernant la couleur de la marge de l'image ou des données de masquage de la ligne ou rangée suivante par exemple. Le deuxième octet peut comprendre notamment une fenêtre de

**0 055 168**

nuances de gris également affectée à la marge.

La Fig. 12 illustre le procédé de transmission de données dans lequel le procédé décrit ci-dessus est appliqué. A l'émission, il est prévu un terminal de composition 58 qui envoie des données de composition introduites à l'aide du clavier 59 à un générateur 60 de language Antiope (voir les ouvrages précités).

Le terminal est associé à une table de composition graphique 61 qui envoie des données à un générateur 62 de language graphique. Ces données sont mises sous forme de paquets d'informations (Fig. 5) et mélangées dans un multiplexeur 63 à un signal vidéo capté par une caméra 64. Le multiplexeur 63 est relié à un émetteur 65 pour que le signal multiplexé soit diffusé sur un canal de télévision.

Bien entendu, à l'émission les paquets de données contiennent des octets supplémentaires pour l'identification des modes de visualisation des rangées à transmettre en mode typographique ou graphique.

A la réception, un poste récepteur vidéo 66 est muni d'un appareil complémentaire 67 qui comporte le circuit tel que représenté sur la Fig. 10.

Compte tenu du fait qu'une page de magazine peut comporter un mélange d'éléments typographiques et graphiques, le temps d'occupation du réseau de la Fig. 12 pour la transmission d'une quantité de messages donnée est comparativement faible. En effet, alors qu'antérieurement, chaque mode de visualisation devait être affecté à une page distincte, cette quantité de message demandait un temps de transmission équivalent à celui des deux pages successives. L'invention permet de ne transmettre qu'une seule page dont la quantité d'information à transmettre est limitée au strict nécessaire, aucun espace de la page n'étant donc inutile.

**Revendications**

1. Procédé pour la visualisation de messages composés de pages sur l'écran d'un dispositif d'affichage à trame balayée (18) tel qu'un écran d'un tube à rayons cathodiques, ou sur les écrans de plusieurs dispositifs d'affichage recevant les mêmes informations codées, les images des pages sont tracées sur chacun des écrans par un balayage ligne par ligne, ledit message comportant à la fois des éléments de nature typographique et des éléments de nature graphique, tandis que chaque page est mémorisée préalablement à son affichage dans une mémoire de page (22), à savoir, pour ce qui concerne les éléments typographiques sous la forme de groupes de code de caractères (15) identifiant respectivement des matrices de caractères stockées dans au moins un générateur de caractères (23) associé à la mémoire de page (22), chaque groupe de code de caractères correspondant au plus à une rangée ayant la largeur de la zone visible (ZV, ZRV) du dispositif d'affichage (18), et pour ce qui concerne les éléments graphiques, sous forme de groupes de codes de points emmagasinés dans la mémoire de page (22), chaque groupe de code de points correspondant au plus à la largeur d'une ligne de l'image, ce procédé consistant lors de la visualisation, à tracer sur l'image successivement des lignes d'image au rythme du balayage ligne sous la commande soit des données extraites du générateur de caractères (23) par adressages répétés des positions de celui-ci identifiés par les adresses contenues dans ladite mémoire (22) pour former des rangées d'éléments typographiques, soit des données extraites directement de la mémoire de page (22) pour former des lignes composées de points d'image individuels, ce procédé consistant à mélanger dans au moins une page de message des éléments typographiques et graphiques, et étant caractérisé en ce qu'il consiste en outre à mémoriser dans ladite mémoire de page entre le dernier octet d'un groupe (I, IV) d'adresses relatives à des éléments typographiques à visualiser et le premier octet d'un groupe (II, III) d'adresses relatives à des éléments graphiques à visualiser, ou inversement, au moins un code binaire de mode de visualisation (48, 49, 50), lesdits dernier et premier octets correspondant respectivement à la fin et au début d'une période de balayage ligne de l'image, ledit code binaire ayant une durée inférieure au temps que met chaque balayage ligne pour traverser la marge latérale non visible (ZM) de l'image vidéo, et à adresser ce code binaire au moment où doit se produire un changement de mode de visualisation pour provoquer sélectivement en vue de la visualisation de l'image, l'adressage des générateurs de caractères (23) par l'intermédiaire de la mémoire de page (22) ou l'adressage direct de celle-ci (Fig. 8, 10).

2. Procédé suivant la revendication 1, caractérisé en ce que le code binaire (48, 49, 50) est formé par un groupe d'octets présenté après la dernière adresse d'un groupe de ligne ou d'une ligne de balayage ligne de l'image suivant que cette dernière adresse appartient respectivement au mode typographique ou graphique.

3. Procédé suivant la revendication 2, caractérisé en ce que, outre les données relatives à l'identification du mode de visualisation du groupe suivant de lignes ou de la ligne suivante, lesdits octets contiennent des données relatives à la couleur de la marge de la page, à des nuances de gris ou d'autres caractéristiques de l'image à visualiser.

4. Dispositif pour la mise en œuvre du procédé défini dans l'une quelconque des revendications 1 à 3, comportant un dispositif d'affichage à trame balayée (18) au moins une mémoire de page (22), au moins un générateur de caractères (23), des moyens (20) pour emmagasiner temporairement des données relatives à une page de magazine dans la mémoire de page et pour extraire ces données de cette mémoire en vue de la visualisation, le cas échéant par l'intermédiaire du générateur de caractères, suivant que

8

**0 055 168**

l'information est en mode graphique ou typographique, lesdites données étant interprétées dans des moyens de traitement (35) qui par l'intermédiaire d'un décodeur (56) sont reliés au dispositif d'affichage, ledit dispositif comportant en outre un circuit à base de temps (43) chargé de coordonner et de synchroniser le transport des données en fonction du balayage de l'écran, ce dispositif étant caractérisé en ce que ladite mémoire de page est reliée audit décodeur par l'intermédiaire d'au moins un registre d'identification (54, 55) dans lequel sont rangées les données relatives à l'identification d'un groupe suivant de données à afficher sur l'écran et en ce que lesdits registres sont reliés au circuit à base de temps pour être validés par un signal de marge engendré par ce circuit à base de temps, lorsque l'affichage de l'écran se trouve à la transition entre la zone visible (ZRV) et la zone de marge (ZM) non visible de l'écran.

5. Procédé de transmission de messages destinés à être visualisés sur au moins un dispositif d'affichage à trame balayée et comportant application du procédé suivant l'une quelconque des revendications 1 à 3, caractérisé en ce qu'il consiste, à l'émission, à adjoindre à des paquets de données relatives à des groupes d'éléments typographiques et des groupes d'éléments graphiques composant ledit message, un code d'identification de mode de visualisation caractérisant respectivement le paquet de données suivant à afficher à la réception sur le ou les dispositifs d'affichage suivant que ce paquet est de nature typographique ou graphique, et à transmettre le signal composite ainsi obtenu à au moins un 'poste récepteur comprenant ledit dispositif d'affichage à trame balayée.

6. Procédé suivant la revendication 5, caractérisé en ce que ledit code d'identification est inséré dans les paquets de données à transmettre immédiatement avant les données caractérisant une ligne ou un groupe de lignes, à afficher sur ledit écran.

7. Réseau de transmission pour la mise en œuvre du procédé suivant l'une quelconque des revendications 5 et 6 comportant des moyens de composition (58, 60, 61, 62) pour engendrer des paquets de données représentant des éléments d'un message composé de pages à visualiser sur l'écran d'au moins un poste récepteur, un canal de transmission et un poste récepteur (66, 67) équipé pour recevoir lesdits paquets de données et les interpréter pour la visualisation sur ledit écran, réseau caractérisé en ce que lesdits moyens de composition comportent un dispositif (60, 62) pour adjoindre un code d'identification aux paquets de données relatif à la nature des groupes d'éléments du message à afficher sur ledit écran, ledit code étant caractéristique de la nature typographique ou graphique à afficher.

8. Réseau de transmission suivant la revendication 7, caractérisé en ce que ledit canal de transmission est un canal de diffusion d'un signal vidéo obtenu à partir d'une caméra (64) et en ce que lesdits paquets de données sont transmis en multiplex avec le signal vidéo sur ledit canal dans des intervalles de temps non occupés pour la transmission du signal vidéo.

## Claims

1. Method for displaying messages composed of pages on the screen of a scanned-raster display device (18), such as a screen of a cathode ray tube or on the screens of several display devices receiving the same coded informations, the images of the pages being drawn on each of the screens by line-by-line scanning, the said message containing both elements of a typographical nature and elements of a graphical nature, each page being stored prior to its display in a page memory (22), namely, in the case of the typographical elements, in the form of character code groups (15) that each identify character matrices stored in at least one character generator (23) associated with the page memory (22), each character code group corresponding at the most to one row of characters having the width of the visible zone (ZV, ZRV) of the display device (18), and, in the case of the graphical elements, in the form of dot code groups that are stored in the page memory (22), each dot code group corresponding at the most to the width of one line of the image, the said method consisting, at the time of the display, in sequentially drawing on the image by image lines at the line scan rate, either under the control of data retrieved from the character generator (23) by repeatedly addressing the locations of the character generator identified by the addresses contained in the said memory (22) in order to form rows of typographical elements, or under the control of data retrieved directly from the page memory (22) in order to form lines composed of individual image dots, this method consisting in mixing typographical and graphical elements in at least one page of the message, and being characterised in that it further consists in storing in said page memory between the last octet of a group (I, IV) of addresses relating to typographical elements to be displayed and the first octet of a group (II, III) of addresses relating to graphical elements to be displayed, or vice versa, at least one binary code representing the mode of display (48, 49, 50), said last and first octets corresponding respectively to the end and the beginning of a period of line scanning of the image, said binary code having a duration less than the time that each line scan needs to cross the non-visible lateral margin (ZV) of the video image, and in addressing that binary code when a change in the mode of display is to be made, in order selectively to cause, in order to display the image, addressing of the character generators (23) by way of the page memory (22), or direct addressing of the page memory (22) (Fig. 8, 10).

2. Method according to claim 1, characterised in that the binary code (48, 49, 50) is formed by a group of octets that is located after the last address of a line group or of a line of the image line scan, depending on whether that last address belongs to the typographical or the graphical mode.

3. Method according to claim 2, characterised in that, in addition to the data relating to the identification of the mode of display of the following group of lines, or of the following line, the said octets contain data relating to the colour of the margin of the page, to shades of grey, or to other characteristics of the image to be displayed.

4. Device for the implementation of the method defined in any one of claims 1 to 3, comprising a scanned-raster display device (18), at least one page memory (22), at least one character generator (23), means (20) for temporarily storing data relating to a magazine page in the page memory and for retrieving those data from that memory for display, if applicable using the character generator, according to whether the data are in graphical or typographical mode, the said data being interpreted in processing means (35) which are connected to the display device by way of a decoder (56), the said device also having a time-base circuit (43) the function of which is to coordinate and synchronise the transmission of the data in dependence on the scanning of the screen, this device being characterised in that the said page memory is connected to the said decoder by way of at least one identification register (54, 55) in which are stored the data relating to the identification of a following group of data to be displayed on the screen, and in that the said registers are connected to the time-base circuit in order to be validated by a margin signal generated by the time-base circuit, when the display of the screen is in transition between the visible zone (RZV) and the non-visible margin zone (ZM) of the screen.

5. Method for the transmission of messages that are to be displayed on at least one scanned-raster display device, and including application of the method according to any one of claims 1 to 3, characterised in that it consists in adding, at the transmitting end, to packets of data relating to groups of typographical elements and groups of graphical elements which make up the said message, an identification code representing the mode of display, which code defines the following packet of data to be displayed at the receiving end on the display device or devices, according to whether that packet is of a typographical or graphical nature, and in transmitting the composite signal thus produced to at least one receiving set comprising the said scanned-raster display device.

6. Method according to claim 5, characterised in that the said identification code is inserted into the packets of data to be transmitted immediately before the data defining a line or a group of lines to be displayed on the said screen.

7. Transmission network for the implementation of the method according to any one of claims 5 and 6, comprising composition means (58, 60, 61, 62) for producing packets of data representing elements of a message composed of pages to be displayed on the screen of at least one receiving set, a transmission channel and a receiving set (66, 67) equipped to receive the said packets of data and interpret them for display on the said screen, which network is characterised in that the said composition means comprise a device (60, 62) for adding to the packets of data an identification code relating to the nature of the groups of elements of the message to be displayed on the said screen, the said code being indicative of the typographical or graphical nature of what is to be displayed.

8. Transmission network according to claim 7, characterised in that the said transmission channel is a broadcast channel for a video signal obtained from a camera (64), and in that the said packets of data are transmitted multiplexed with the video signal along the said channel in the time intervals not employed for transmission of the video signal.

**Patentansprüche**

1. Verfahren zur Anzeige von aus Seiten zusammengesetzten Nachrichten auf dem Bildschirm eines nach dem Rasterverfahren arbeitenden Sichtgeräts (18), beispielsweise auf einem Bildschirm einer Katodenstrahlröhre, oder auf den Bildschirmen mehrerer die gleichen codierten Informationen empfangenden Sichtgeräte, wobei die Bilder der Seiten auf jedem der Schirme durch zeilenweises Abtasten gezeichnet werden, wobei die Nachricht gleichzeitig typographische und graphische Elemente enthält, während jede Seite vor ihrer Wiedergabe in einem Seitenspeicher (22) gespeichert wird, nämlich, was die typographischen Elemente anbelangt, in Form von Zeichencodegruppen (15), die jeweils Zeichenmatrizen kennzeichnen, die in wenigstens einem dem Seitenspeicher (22) zugeordneten Zeichengenerator (23) abgespeichert sind, wobei jede Zeichencodegruppe höchstens einem Bereich entspricht, der die Breite der sichtbaren Zone (ZV, ZRV) des Sichtgeräts (18) hat, und, was die graphischen Elemente anbelangt, in Form von in dem Seitenspeicher (22) gespeicherten Punktecodegruppen, von denen jede höchstens der Breite einer Bildzeile entspricht, wobei das Verfahren darin besteht, daß während der Anzeige auf dem Bild nacheinander Bildzeilen im Takt der Zeilenabtastung gezeichnet werden, und zwar unter der Steuerung entweder durch Daten, die dem Zeichengenerator (23) durch wiederholte Adressierung von Speicherplätzen entnommen werden, die von den in dem Speicher (22) enthaltenen Adressen angegeben werden, damit Bereiche mit typographischen Elementen erzeugt werden, oder von Daten, die dem Seitenspeicher (22) direkt entnommen werden, damit Zeilen gebildet werden, die aus einzelnen Bildpunkten zusammengesetzt sind, wobei das Verfahren weiterhin darin besteht, daß in wenigstens einer Nachrichtenseite typographische und graphische Elemente gemischt werden, dadurch gekennzeichnet, daß das Verfahren außerdem darin besteht, in dem Seitenspeicher zwischen dem letzten Oktett einer Gruppe (I, IV) von Adressen, die sich auf wiederzugebende typographische Elemente beziehen, und dem ersten Oktett einer Gruppe (II, III) von Adressen, die sich auf wiederzugebende graphische Elemente beziehen, oder umgekehrt, wenigstens ein binärer Wiedergabemoduscode (48, 49, 50) gespeichert wird, wobei die letzten und die ersten Oktette dem Ende bzw. dem Beginn einer Zeilenabtastperiode des Bildes entsprechen, wobei der binäre Code eine Dauer hat, die kürzer als die Zeit ist, die jede Zeilenabtastung zum Durchlaufen des nicht sichtbaren seitlichen Randes (ZM) des Videobildes benötigt, und daß dieser Binärcode an dem Zeitpunkt adressiert wird, an dem eine Änderung des Wiedergabemodus erfolgen soll, damit in selektiver Weise bei der Wiedergabe des Bildes die Adressierung der Zeichengeneratoren (23) über den Seitenspeicher (22) oder dessen direkte Adressierung (Fig. 8, 10) hervorgerufen wird.

2. Verfahren nach Anspruch 1, dadurch gekennzeichnet, daß der Binärcode (48, 49, 50) von einer Oktettgruppe gebildet wird, die nach der letzten Adresse einer Zeilengruppe oder einer Zeile der Zeilenabtastung des Bildes dargeboten wird, je nachdem, ob diese letzte Adresse der typographischen oder der graphischen Betriebsart angehört.

3. Verfahren nach Anspruch 2, dadurch gekennzeichnet, daß die Oktette außer den Daten, die sich auf die Identifizierung des Wiedergabemodus der folgenden Zeilengruppe oder der folgenden Zeile beziehen, Daten enthalten, die sich auf die Farbe des Seitenrandes, auf Graustufen oder auf andere Kennmerkmale des wiederzugebenden Bildes beziehen.

4. Vorrichtung zur Durchführung des Verfahrens nach einem der Ansprüche 1 bis 3, mit einem nach dem Rasterverfahren arbeitenden Sichtgerät (18), wenigstens einem Seitenspeicher (22), wenigstens einem Zeichengenerator (23), Mitteln (20) zum Zwischenspeichern von sich auf eine Magazinseite beziehenden Daten in dem Seitenspeicher und, falls erforderlich, zum Entnehmen dieser Daten aus diesem Speicher zur Wiedergabe unter Mitwirkung des Zeichengenerators, je nachdem, ob die Information im graphischen Modus oder im typographischen Modus vorliegt, wobei die Daten in Verarbeitungsmitteln (35) interpretiert werden, die über einen Decodierer (56) an das Sichtgerät angeschlossen sind, wobei die Vorrichtung außerdem eine Zeitbasisschaltung (43) enthält, deren Aufgabe es ist, den Transport der Daten in Abhängigkeit von der Abtastung des Bildschirms zu koordinieren und zu synchronisieren, dadurch gekennzeichnet, daß der Seitenspeicher mit dem Decodierer über wenigstens ein Identifizierungsregister (54, 55) angeschlossen ist, in dem die sich auf die Identifizierung einer Gruppe gemäß den auf dem Bildschirm wiederzugebenden Daten angeordnet sind, und daß die Register an die Zeitbasisschaltung angeschlossen sind, damit sie von einem von dieser Zeitbasisschaltung abgegebenem Randsignal bestätigt werden, wenn sich die Bildschirmwiedergabe am Übergang zwischen der Sichtzone (ZRV) und der auf dem Bildschirm nicht sichtbaren Randzone (ZM) befindet.

5. Verfahren zur Übertragung von auf wenigstens einem nach dem Rasterverfahren arbeitenden Sichtgerät wiederzugebenden Nachrichten unter Anwendung des Verfahrens nach einem der Ansprüche 1 bis 3, dadurch gekennzeichnet, daß beim Senden an Datenpakete, die sich auf die Nachricht bildende Gruppen typographischer Elemente und Gruppen graphischer Elemente beziehen, ein Code zur Identifizierung des Wiedergabemodus angefügt wird, der jeweils das nächste beim Empfang auf dem Sichtgerät oder auf den Sichtgeräten wiederzugebende Datenpaket bezeichnet, je nachdem, ob dieses Datenpaket typographisch oder graphisch ist, und daß das auf diese Weise erhaltene zusammengesetzte Signal zu wenigstens einem Empfänger übertragen wird, der das nach dem Rasterverfahren arbeitende Sichtgerät enthält.

6. Verfahren nach Anspruch 5, dadurch gekennzeichnet, daß der Identifizierungscode in die zu übertragenden Datenpakete unmittelbar vor den Daten eingefügt wird, die eine auf dem Bildschirm wiederzugebende Zeile oder Zeilengruppe kennzeichnen.

7. Übertragungsnetz zur Durchführung des Verfahrens nach einem der Ansprüche 5 und 6 mit Zusammensetzmitteln (58, 60, 61, 62) zum Abgeben von Datenpaketen, die Elemente einer aus auf dem Bildschirm wenigstens eines Empfangsgeräts wiederzugebenden Seiten zusammengesetzten Nachricht repräsentieren, einem Übertragungskanal und einem Empfangsgerät (66, 67), das für den Empfang der Datenpakete und zu ihrer Auswertung für die Wiedergabe auf dem Bildschirm ausgerüstet ist, dadurch gekennzeichnet, daß die Zusammensetzmittel eine Vorrichtung (60, 62) enthalten, mit deren Hilfe ein Identifizierungscode an Datenpakete angefügt werden kann, der sich auf die Art der Gruppen von Elementen der auf dem Bildschirm wiederzugebenden Nachricht bezieht, wobei dieser Code durch die typographische oder graphische Natur dessen, was wiederzugeben ist, gekennzeichnet ist.

8. Übertragungsnetz nach Anspruch 7, dadurch gekennzeichnet, daß der Übertragungskanal ein Kanal zum Senden eines Videosignals ist, das mittels einer Kamera (64) erhalten wird, und daß die Datenpakete im Multiplexbetrieb mit dem Videosignal in den von der Übertragung des Videosignals nicht besetzten Zeitintervallen in dem Übertragungskanal übertragen werden.

## FIG.1

## FIG.2

RANGÉE I

RANGÉE II

RANGÉE n

CARACTERE I    CARACTERE II    CARACTERE n

# 0 055 168

## FIG.3

LIGNE 1 ... 6, 6

LIGNE n ... 6

## FIG.4

SYNCHROTRAME

40 LIGNES

48 µs

64 µs

20 ms 312/313 LIGNES

ZM

23 LIGNES

ZV — SYNCHROTRAME

SYNCHRO LIGNE — SYNCHRO LIGNE

## FIG.5

9  10  11  12  13

| 0 | 1 | 0 | 41 | B | 41 | 41 | B | 61 |

7 SYNCHRO LIGNE

8 PREFIXE — MOT DE SYNCRHO — DRAPEAU PAGE — N° PAGE — DONNÉES

7 SYNCHRO LIGNE

## FIG.6

14b  14a

OCT I — OCT II

ATTRIBUT — CODE ASCII

| 0 | 0 | 0 | 1 | 0 | 0 | 0 | 1 | 1 | 1 | 0 | 0 | 0 | 0 | 1 |

17 AUTRES ATTR — "A" 15

## FIG.7

$P_X$  $P_{X+1}$  $P_{X+2}$  $P_{X+3}$

| 1 | 0 | 0 | 1 | 0 | 0 | 1 | 0 | 0 | 1 | 1 | 0 |

2

Fig. 8

Fig. 9

FIG.10

# FIG. 11

FIG.12

RECEPTEUR
ANTIOPE

(FIG.10)

0 055 168